# EUROPEAN PATENT APPLICATION

(11) **EP 3 808 182 A1**
(43) Date of publication of application: **21.04.2021**
(21) Application number: 20202148.1
(22) Date of filing: 15.10.2020
(51) Int. Cl.: A21C 9/06

(54) **FILLING INJECTION APPARATUS FOR FILLED PASTA**

(30) Priority: 15.10.2019 IT 201900018833
(71) Applicant: Pastamac S.r.l., 20832 Desio (MB) (IT)
(72) Inventor: MAESTRI, Luigi, 20832 DESIO (MB) (IT); PORCARI, Gabriele, deceased (IT)
(74) Representative: Guareschi, Antonella

(57) **Abstract**

An injection apparatus (10), for depositing the filling on a dough sheet for making filled pasta, comprises a filling outlet nozzle (2), a dosing device (1), between which a distributor (5) adapted to receive the filling from a tank (4) is interposed, and it comprises movement means (3) configured to achieve a relative sliding of the dosing device (1) with respect to the nozzle (2) and to the distributor (5), said sliding being adapted to allow/interrupt the passage of the filling, wherein said movement means (3) comprise a linear actuator (31) provided with alternating rectilinear motion.

## Description

### FIELD OF APPLICATION OF THE INVENTION

The present finding belongs to the field of food machinery for the production of fresh pasta, and in particular for the production of filled pasta specialties such as, for example, *ravioli, agnolotti, ravioli al plin* (ravioli closed by pinching). In particular, the present invention relates to the machine part that injects the filling onto the sheet.

### STATE OF THE ART

Some types of machines for making filled pasta are known to the state of the art, which generally work with a horizontally or vertically stretched out sheet; in this case, we will mostly refer to machines that work a horizontally stretched out sheet.

Said sheet is folded, thus creating a "U" shape with its opening facing upwards, with respect to the machine support surface, inside which the filling is inserted through a specially configured distributor to dose and deposit the filling continuously or intermittently onto the sheet, and then to move on to the forming, folding, and cutting steps.

Other machines, instead of using a sheet that is stretched out and folded in a U shape, provide a kneader that is able to feed a die equipped with a single "U" slot, through which the sheet already folded in a "U" shape is extruded.

At the exit of the die, and in line with it, a container for the filling is provided that is operatively connected to a continuous or intermittent injection apparatus, which deposits the filling onto the drawn sheet; then a mold shapes the ravioli by closing and pressing the dough.

In both said types of machines, the container of the filling is configured to transfer said filling to an injection apparatus that is configured for depositing the filling onto the sheet.

In case the filling has to be deposited intermittently, said injection apparatus generally comprises a closing device that interrupts the passage of the filling from the container towards a filling outlet nozzle configured for depositing the filling onto the sheet.

Said closing device is generally shaped like a guillotine, i.e., it comprises a member placed at a mouth of the outlet nozzle configured to block the exit of the filling, which is movable in a transverse direction to that of the injection direction of the filling towards the sheet.

Alternatively, said closing device may be configured as a plunger that interrupts the passage of the filling from the container towards a filling outlet nozzle, which is mobile in the filling injection direction towards the sheet and configured to flow inside the nozzle, thus taking its entire area of passage.

In the known machines, said plunger is moved by means of connecting rod-and-crank-shaped devices, which are moved by motorized drive devices.

First, said system involves a mechanical complexity due to the high number of components to be manufactured and assembled.

Furthermore, a further problem of the connecting rod and crank system is due to the fact that it is not possible to properly manage the plunger up and down speed as a function of the different operating steps.

In particular, by rotating the connecting rod, the plunger moves with a variable speed along a straight path, between two end points called top dead center and bottom dead center. The dead spots are the points where the speed of the plunger is null. In the injection apparatus, said dead spots correspond to the fully open and fully closed positions of the closing device.

It shall be noted that the speed is maximum in a point that is before half of the stroke, for the forward stroke, and after half of the stroke, for the return stroke.

Therefore, this involves dragging part of the filling together with the plunger, when the closing device switches from a closed to an open configuration, as the initial speed of the plunger is low, since said plunger starts with a zero speed and reaches the maximum speed only near the middle of the stroke.

In fact, the speed change is linked to the motion laws of the kinematics, and this does not allow to change it at will.

This does not ensure the injection accuracy.

Furthermore, said injection apparatus mainly allows to open or close the passage of the filling from the container towards the outlet nozzle, but it does not allow to dose it correctly.

In fact, it is difficult to block a connecting rod and crank system in positions that are different from the dead points, as resetting the speed at other points generates a positioning inaccuracy.

Consequently, this would lead to a dosage inaccuracy.

### DISCLOSURE AND ADVANTAGES OF THE FINDING

The technical problem underlying the present invention is to provide an injection apparatus for depositing the filling on a dough sheet for making filled pasta that is structurally and functionally devised to overcome one or more of the limitations set forth above with reference to the mentioned known art.

Within the scope of the above-mentioned problem, a main aim of the invention is to develop an injection apparatus for depositing the filling on a dough sheet for making filled pasta, which allows to optimize the deposition of the filling in an intermittent manner, thus optimizing the reliability and flexibility of use thereof.

A further object of the invention is also to provide to the art an injection apparatus for depositing the filling on a dough sheet for making filled pasta within the scope of a solution that allows metering an output that is both intermittent and continuous of the filling in a repeating and accurate manner.

These and other objects are achieved by virtue of the characteristics of the invention reported in the independent claims. The dependent claims outline preferred and/or particularly advantageous aspects of the invention.

In particular, an embodiment of the present invention provides an injection apparatus for depositing the filling on a dough sheet for making filled pasta, comprises a filling outlet nozzle, a dosing device, between which a distributor adapted to receive the filling from a tank interposes, and comprises movement means configured to achieve a relative sliding of the dosing device with respect to the nozzle and to the distributor, said sliding being adapted to allow/interrupt the passage of the filling; said movement means comprise a linear actuator provided with alternating rectilinear motion.

By virtue of this solution, the speed of said sliding can be controlled and varied so that said movement is sufficiently quick to allow that the filling is deposited properly and in a repeating manner. In fact, the linear actuator being provided with alternating rectilinear motion allows reaching the maximum speed already after a few millimeters, preferably immediately as soon as it is restarted from the stop points, thus solving the problems related to the dragging of part of the filling that should be deposited.

Another aspect of the invention is to provide an injection apparatus wherein the distributor comprises an opening adapted to put it in communication with the tank, preferably by connection means; said opening is respectively freed or obstructed during the relative sliding of the dosing device with respect to the distributor.

Therefore, it is possible to free or to obstruct said opening by implementing the dosage required for the operation with an intermittent deposition of the filling.

Furthermore, the injection apparatus may provide that the linear actuator comprises a movable stem directly connected to the dosing device to move it with respect to the distributor and the nozzle, according to an alternating rectilinear motion.

Therefore, the nozzle and the distributor remain in a stationary position, while it is the dosing device that, once moved by the movement means, obstructs or frees the opening.

By virtue of this solution, the nozzle remains in a stationary position with respect to the sheet, allowing to keep it at the proper distance from the same sheet to ensure the repeatability of the filling deposition.

A further aspect of the finding provides an injection apparatus in which the movement means provide that the linear actuator is a hydraulic piston.

Advantageously, said solution allows both to manage high speeds of the movable stem, and to have a high force available such as to allow processing even the densest fillings.

An aspect of the invention provides that the dosing device comprises a plunger slidable inside the distributor and preferably the nozzle, said plunger being mechanically connected to the movable stem.

By virtue of this solution, the reciprocating sliding motion of the plunger is transmitted by the movable stem to which it is directly connected, and this has the advantage to implement a simple solution with a few mechanical components adapted to reduce the costs of the apparatus and to simplify the maintenance thereof.

According to a possible embodiment, the plunger has a cylindrical conformation for sliding inside a hole of the nozzle, said hole preferably having a diameter equal to that of the plunger and comprising downstream an outlet mouth, facing the sheet on which the filling has to be deposited.

In such a manner, since the plunger has the same diameter as the nozzle hole, except for the construction tolerances required for the sliding, completely closes the nozzle, preventing any filling leakage between the plunger and the nozzle.

Furthermore, the distributor preferably comprises a chamber located upstream of the nozzle hole, said chamber being in communication with an inlet mouth of said nozzle hole and with the opening preferably arranged on the lateral surface of said chamber.

The plunger preferably slides inside the chamber being shaped as a cylindrical hole coaxial with the nozzle hole.

In particular, said cylindrical hole of the chamber has a larger diameter than the nozzle hole and preferably than the plunger.

This allows the filling to be distributed all around the plunger and therefore the pressure that the filling exerts on said plunger is distributed along its entire external surface at the chamber. The bending stress of the plunger is therefore reduced, which consequently could affect the sliding thereof into the hole.

Advantageously, the dosing device takes an open position and a closed position, in which said open position provides that the plunger is positioned above the opening and in which said closed position provides that the plunger is positioned below the opening, preferably at the inlet mouth of the nozzle, further preferably below the outlet mouth of the nozzle.

In particular, the plunger may also take intermediate positions between the open position and the closed position in which the opening is partially obstructed to dose the passage of the filling from the tank towards the filling outlet nozzle.

Therefore, by virtue of said solution, is it possible not only to create an injection apparatus that can work intermittently in order to deposit individual portions of filling, but it further allows to dose the amount of filling that has to come out of the nozzle both during an intermittent operation and during a continuous operation.

Said objects and advantages are all achieved by the injection apparatus, subject matter of the present finding, which is characterized by what has been provided for in the claims set forth herein below.

### BIERF DESCRIPTION OF THE FIGURES

This and other characteristics will be better highlighted by the following description of some embodiments, which are illustrated by way of non-limiting example only in the accompanying drawings.
- Figure 1: illustrates an axonometric view of a ravioli machine to make several rows of ravioli;
- Figure 2: illustrates an axonometric view of a ravioli machine with die and injection apparatus;
- Figure 3: illustrates an axonometric view of a ravioli machine with die, injection apparatus and ravioli forming device;

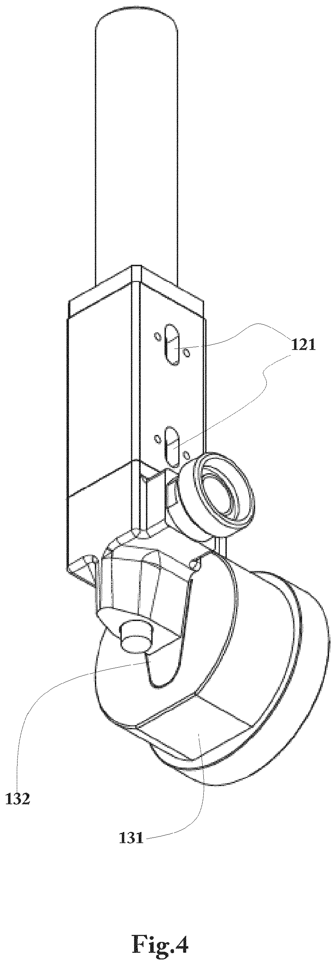

- Figure 4: illustrates an axonometric view of an injection apparatus that is located in the proximity of a trafila;
- Figure 5: illustrates a sectional view and related detail of an injection apparatus positioned in an open configuration;
- Figure 6: illustrates a sectional view and related detail of an injection apparatus positioned in a closed configuration.

### DESCRIPTION OF THE FINDING

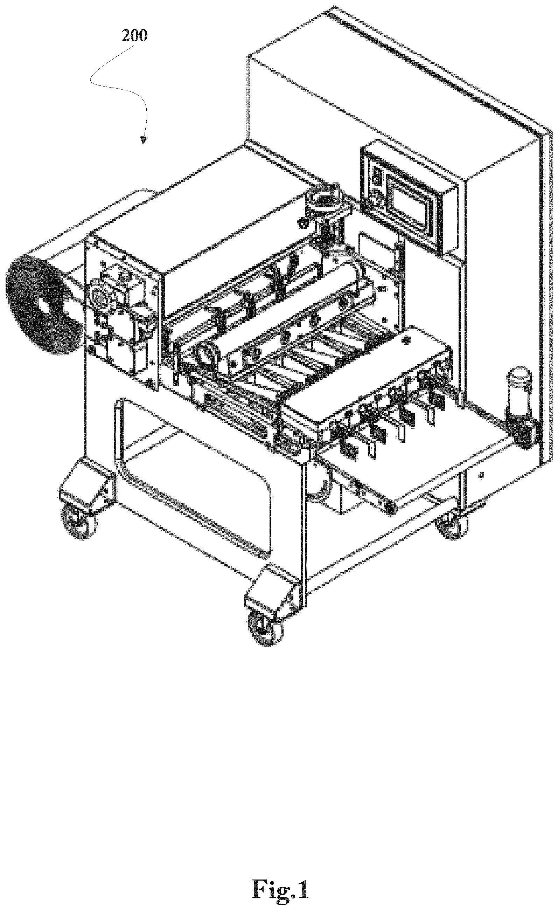

With particular reference to the figures 1, 2, and 3, two different types of ravioli machines 100, 200 for making filled pasta are illustrated.

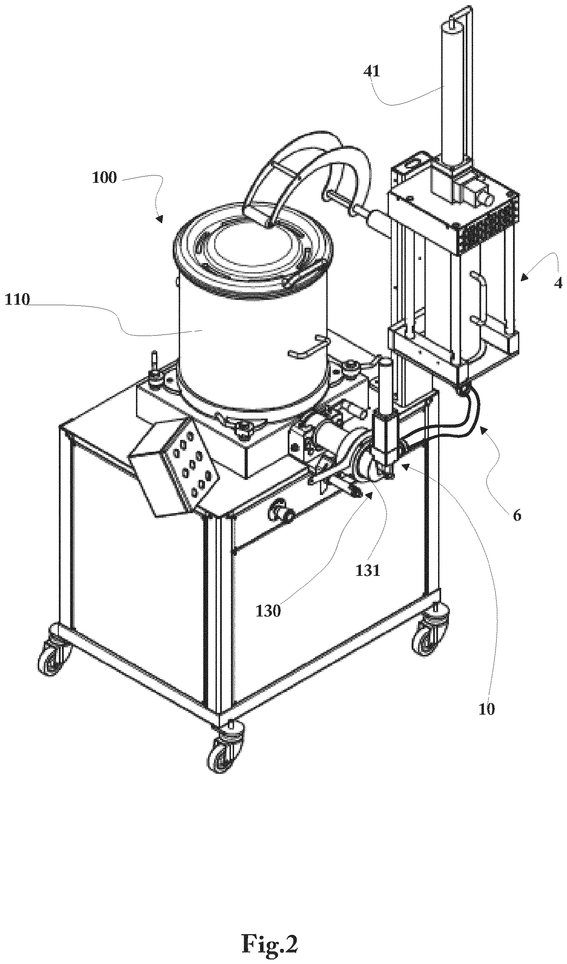

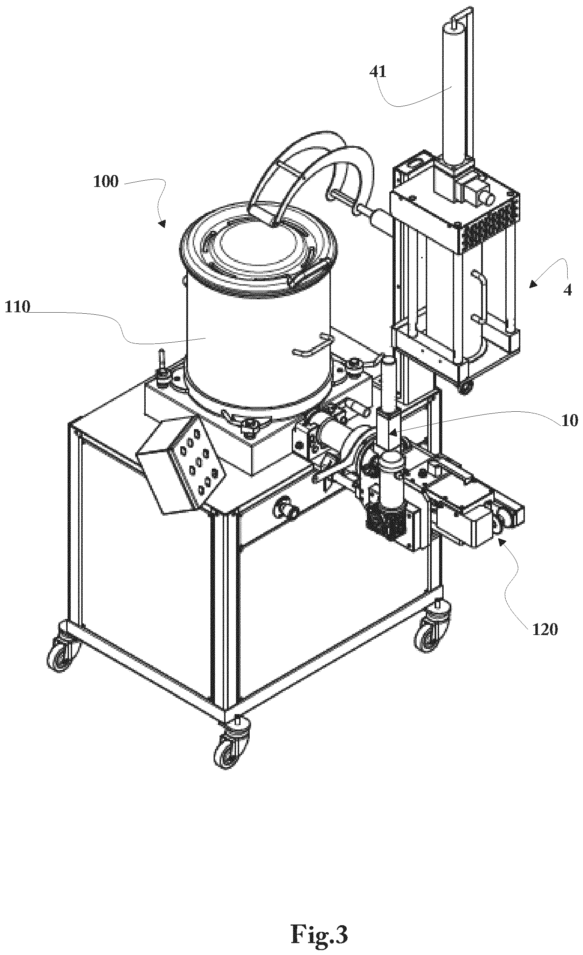

In figures 2 and 3, an exemplary configuration of a first type of ravioli machine, which will be defined as ravioli machine with die 100 herein, is shown; an injection apparatus 10 according to the invention as illustrated in figures 2 and 3 can be installed on said ravioli machine with die 100.

In particular, on the ravioli machine with die 100, illustrated in figure 3, the filled pasta shaping means 120 are also installed, while in figure 2 said shaping means 120 are not installed in order to highlight the assembling of the injection apparatus 10.

Figure 1 instead illustrates a ravioli machine 200, which will be defined as ravioli machine with stretched out dough 200 obtained by lamination, which can be configured with one or more forming paths. On said ravioli machine with stretched out dough 200, an injection apparatus 10 according to the invention can also be installed, said installation not being illustrated in the figure.

As regards the ravioli machine with die 100, it provides a traditional type mixer 110 on the bottom of which a screw is provided, which compresses the dough into a die 130.

The die comprises a head 131 with a slot 132 that is substantially "U"-shaped and from which the pasta pushed by the screw is continuously drawn. The slot 132 can also have a different shape as long as the drawn pasta creates a containment channel for the filling.

A tank for the storage of the filling is indicated by the numeral reference 4, and an injection apparatus for the distribution of the filling onto the pasta is indicated by the numeral reference 10, which are operatively connected preferably by feeding means 6.

The forming means that are configured to achieve a certain shape of filled pasta are indicated by the numeral reference 120, and they generally comprise a forming roller shaped like a rotating drum that bears pockets arranged at a constant pitch and shaped so as to impress the shape of the ravioli.

Said forming roller generally also comprises cutting means shaped so as to separate and detach the ravioli from the remaining strip of sheet.

The pasta that comes out of the die 130 generally has substantially vertical U-wings to allow the filling to descend from above by the injection apparatus 10.

As mentioned herein above, the injection apparatus 10 is operatively connected preferably by feeding means 6 to the storage tank 4; the filling is generally placed manually into said storage tank 4. In the preferably cylindrical tank 4, a piston 41 may slide, which pushes the filling through the feeding means.

Therefore, the filling arrives at the injection apparatus 10 under the thrust of a pressure exerted by the piston 41.

Said filling can be deposited on the sheet and, in such a case within the "U", in a continuous or intermittent manner.

The intermittent deposition allows saving some amount of the filling used and prevents the filling from being crushed by the forming means where the sheet has to abut to close the ravioli.

Therefore, to achieve an optimal filling deposition, the injection apparatus must be able to deposit said filling in an intermittent manner.

To this aim, it must ensure the accuracy of the deposited amount. Furthermore, it must be able to be synchronized with the movement of the forming means 120.

Therefore, subject matter of the finding is an injection apparatus 10 for depositing the filling on a dough sheet for making filled pasta, comprising a filling outlet nozzle 2, a dosing device 1, between which a distributor 5 adapted to receive the filling from a tank 4 is interposed, and movement means 3 configured to achieve a relative sliding of the dosing device 1 with respect to the nozzle 2 and to the distributor 5, said sliding being adapted to allow/interrupt the passage of the filling, characterized in that said movement means 3 comprise a linear actuator 31 provided with alternating rectilinear motion.

By virtue of this solution, the speed of said sliding can be controlled and varied so that said movement is sufficiently quick to allow that the filling is deposited properly and in a repeating manner.

In fact, said movement makes it possible to manage the speed variation in a way that is not constrained to the laws of motion of any kinematics, as it happens in known systems with connecting rod and crank; the operation of these connecting rod and crank systems involves the dragging of part of the filling, to the detriment of the injection accuracy.

By virtue to the fact that the linear actuator 31 is provided with an alternating rectilinear motion, it is possible to reach the maximum speed already after a few millimeters, preferably immediately as soon as it is restarted from the stop points, thus solving the aforementioned problems.

According to an aspect of the finding, the distributor 5 comprises an opening 51 adapted to put it in communication with the tank 4, preferably by connection means 6; said opening 51 is respectively freed or obstructed during the relative sliding of the dosing device 1 with respect to the distributor 5.

In fact, the distributor 5 allows the passage of the filling from the tank 4 preferably by connection means 6 that are put in communication with the opening 51.

Therefore, clearing or obstructing said opening 51 determines the passage of the filling or not, thus obtaining the dosage required to deposit the filling not in a continuous, but in an intermittent manner.

A preferred embodiment provides that the linear actuator 31 comprises a movable stem 32 directly connected to the dosing device 1 to move it with respect to the distributor 5 and the nozzle 2, according to an alternating rectilinear motion.

Therefore, the nozzle 2 and the distributor 5 remain in a stationary position, while it is the dosing device 1 that, being moved by the movement means 3, obstructs or clears the opening 51.

By virtue of this solution the nozzle 2 remains in a stationary position with respect to the sheet, allowing to keep it at the correct distance from the same sheet to ensure the correct deposition of the filling.

In the same manner, the distributor 5, since it remains in a stationary position, implies that also the connection means 6 such as, for example, pipes or fittings, remain in a stationary position to the advantage of an implementation simplicity of realization.

In particular the movement means 3 provide that the linear actuator 31 is a hydraulic piston.

Advantageously said solution allows both to manage even high speeds of the movable stem 32, and to have a high force available to allow processing even the thickest fillings.

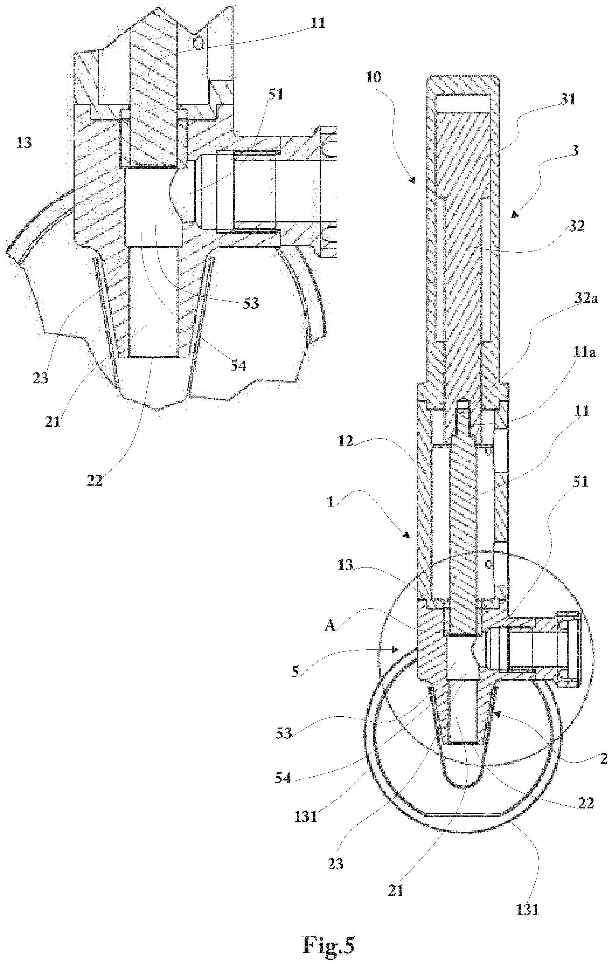

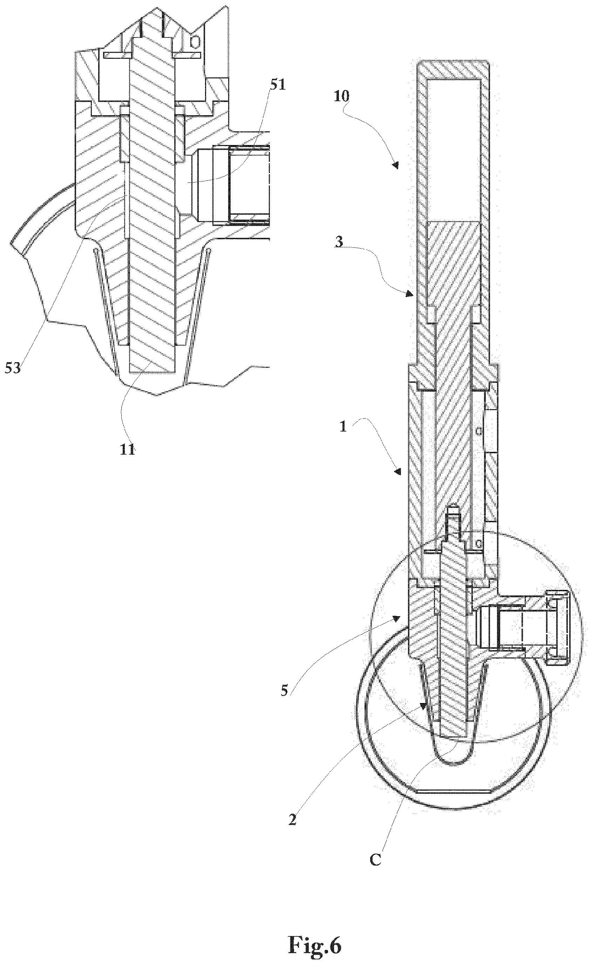

Furthermore, as illustrated in figures 5 and 6, the movable stem 32 may have a diameter slightly less than that of the bore of the chamber of the hydraulic cylinder 31. This allows obtaining higher ascent speeds than the descent ones, the volume of oil to be inserted in the chamber containing the stem being lower than that of the other chamber; in such a manner the achievement of high climbing speeds is favored, which, as explained above, reduces the non-dragging of the filling.

Furthermore, the hydraulic piston can be managed by the same hydraulic unit and/or pump, which is generally used to activate il piston 41 of the tank 4 that pushes the filling towards the distributor 5 preferably by connection means 6.

In such a manner the exploitation of the components already composing the ravioli machine 100, 200 is optimized.

However, it is understood that what has been described above has an exemplary, non-limiting value; therefore, any detail variations that may be required due to technical and/or functional reasons, such as, for example, an electric or pneumatic piston, are considered to be anyhow within the same protection scope.

As illustrated in figures 5 and 6, the dosing device 1 comprises a plunger 11 slidable inside the distributor 5 and preferably the nozzle 2, said plunger 11 being mechanically connected to the movable stem 32.

By virtue of this solution the reciprocating sliding motion of the plunger 11 is transmitted by the movable stem 32 to which it is directly connected.

By virtue of this solution the plunger 11 exhibits:
- sufficient force to descend inside the distributor 5 and preferably the nozzle 2 pushing the filling towards the sheet onto which it has to be deposited,
- a high sliding speed so that the plunger 11 does not drag the filling therewith during its upward movement.

Preferably, the plunger 11 is engaged onto the movable stem 32 by means of a threaded connection 32a, 11a. However, it is understood that alternative coupling solutions known to a person skilled in the art fall within the protection scope of the finding.

In particular, an embodiment provides that the plunger 11 has a cylindrical conformation to slide inside a hole 21 of the nozzle 2.

Said hole 21 preferably has a diameter that is the same as that of the plunger 11 and said hole 21 comprises downstream an outlet mouth 22, facing the sheet on which the filling has to be deposited.

In such a manner, since the plunger 11 has the same diameter as the hole 21, except for the construction tolerances required for the sliding, it completely closes the nozzle 2 preventing any passage of the filling between the plunger 11 and the nozzle 2.

As illustrated in the figures 5 and 6, a preferred embodiment provides that the distributor 5 comprises a chamber 53 located upstream of the hole 21; said chamber 53 is in communication with an inlet mouth 23 of said hole 21 and with the opening 51 preferably arranged on the lateral surface of said chamber 53.

As illustrated in the figures, chamber 53 may extend below the opening 51.

Preferably the plunger 11 slides inside the chamber 53 being shaped as a cylindrical hole 54 coaxial with the hole 21.

By virtue of this solution, as illustrated in the figures, the plunger 11 slides along the chamber 53 to obstruct/clear the opening 51.

During the descent phase of the plunger 11 adapted to block the passage of the filling towards the nozzle2, preferably the plunger 11 continues its run beyond the hole 54 of the chamber 53 and passes through the inlet mouth 23 to the hole 21 of the nozzle 2.

Furthermore, the cylindrical hole 54 of the chamber 53 preferably has a larger diameter than the hole 21 and preferably than the plunger 11.

The chamber 53 receives the filling through the opening 51 and when the plunger 11 is inside the chamber 53, since this chamber 53 is larger in diameter, it causes the filling to be distributed all around the plunger 11.

In such a manner, also the pressure that the filling exerts onto the plunger 11 is distributed along its entire external surface at the chamber 53.

By virtue of this solution, the plunger 11 does not receive the pressure of the filling only from the side where it interfaces with the opening 51, which would excessively stress it to bend and consequently adversely affect the sliding thereof inside hole 21.

Said characteristic is important; in fact, the presence of a chamber 53, at the opening 51, having a larger diameter than the plunger 11, balances the pressure distribution onto said plunger 11.

In fact, it is important to ensure a rectilinear configuration for the plunger 11 and to achieve a smooth sliding inside the nozzle 2, the tolerances between the hole 21 and the plunger 11 being reduced to avoid leakages of the filling.

In a preferred embodiment, the distributor 5 is made in one piece with the nozzle 2.

By virtue of this solution, the assembly of the injection apparatus 10 is facilitated and the hygienic aspect of the part in contact with the filling is improved by reducing the joints in which the same filling can get stuck.

As previously described, the prior art provides for moving the plunger 11 by means of a connecting rod and crank system. With this system it is difficult to block the plunger in positions that are different from the dead points, as resetting the speed in other points different from the dead points generates a positioning inaccuracy.

On the contrary, in said injection apparatus 10, which is the subject matter of the finding, the dosing device 1 takes the open position A and the closed position C in which said open position A provides that the plunger 11 is positioned above the opening 51 and in which said closed position C provides that the plunger 11 is positioned below the opening 51 preferably at the inlet mouth 23 of the nozzle 2, further preferably below the outlet mouth 22 of the nozzle 2.

The fact that the chamber 53 may extend below the opening 51, combined with the fact that the cylindrical hole 54 of the chamber 53 has a larger diameter than the plunger 11, means that in order to completely close the passage of the filling, said plunger 11 must get not only below the opening 51, but also up to the lower end of the cylindrical hole 54, i.e., at the inlet mouth 23.

Therefore, the intermittent operation of said injection apparatus 10 can be summarized as follows:
- the plunger 11 is placed above the opening 51 in an open position A: the filling passes from said opening 51 through the cylindrical hole 54 of the chamber 53 to get via the inlet mouth 23 to the hole 21 of the nozzle 2 and to exit from the outlet mouth 22 onto the sheet;
- the plunger 11 descends inside the cylindrical hole 54 of the chamber 53, to be located below the opening 51 in a closed position C, preferably at the inlet mouth 23 of the nozzle 2: the filling remains upstream of the opening 51 and/or inside the chamber 53 and its passage to the nozzle 2 is blocked;
- the plunger 11 can continue its stroke through the inlet mouth 23, then along the hole 21 of the nozzle 2, and it may exit the outlet mouth 22 to completely empty the nozzle 2 of the filling;
- the plunger 11 remains in said position during the time required to determine the desired deposition intermittence;
- the plunger 11 repeats the previous path in the reverse direction, i.e., it goes up to reach the open position A: the filling passes from said opening 51 through the distributor 5, up to nozzle 2 to exit onto the sheet.

Said cycle is repeated with each filling deposition. A preferred embodiment provides that the plunger 11 can also take intermediate positions I between the open position A and the closed position C, so that the opening 51 is partially obstructed to dose the passage of the filling from the tank 4 towards the filling outlet nozzle 2.

Therefore, by virtue of said solution, is it possible not only to make an injection apparatus 10 that can work intermittently for depositing individual portions of filling, but it further allows to dose the amount of filling that has to exit the nozzle 2.

Moreover, thanks to the linear actuator 31, the force required to push the filling towards the sheet when the plunger 11 moves to the position C is provided, and the speed required not to drag the filling when the motion of the plunger 11 to bring it to the open position A is inverted is provided.

Moreover, since the moving of the plunger 11 is carried out by means of a linear actuator 31, preferably a hydraulic piston, it is also possible to exert a variable force, which allows to work with fillings having different textures.

Said possibility to dose the amount of filling that exit the nozzle 2 can be used both in the case that the injection apparatus 10 has to work continuously and in the case in which it has to work intermittently.

Therefore, said solution provides an injection apparatus 10 having a very flexible operation. This allows the same injection apparatus to be used even when the format of the filled pasta varies, for example, between a pasta requiring a greater or a lesser amount of filling.

Figures 5 and 6 show a further possible feature whereby the dosing device 1 comprises a body 12 to mechanically connect it to the linear actuator 31 on one side and to the distributor 5 on the other and shaped so as to contain the movable stem 32 and the plunger 11 allowing the stroke necessary to reach the open position A and the closed position C.

To better ensure a smooth sliding of the plunger 11 along the hole 21 of the nozzle 2, a further aspect of the finding provides that the injection apparatus 10 comprises guide elements 13 mechanically connected to the body 12 and/or to the distributor 5 and configured to keep the plunger 11 guided during the movement thereof.

By guide elements 13, it is intended everything that is required according to a person skilled in the art to keep a cylindrical body guided during its sliding, such as, for example, bushings, bearings, etc.

The use of gaskets and/or scrapers preferably at said guide elements 13 may also be provided, to keep the plunger 11 clean and to prevent the dragging of the filling, thus ensuring the hygiene of the solution.

In particular, the body 12 comprises fastening elements 121 to receive detecting elements configured to intercept corresponding cams and to communicate with a control unit to manage the position of the plunger 11.

By virtue of this solution it is possible to detect in a simple and effective manner the open A and closed C positions of the plunger 11 and for the control and positioning according to recipe, i.e., at intermediate positions I according to the specific format of filled pasta to be made.

A subject matter of the finding is also the ravioli machine 100, 200 in which the injection apparatus 10 is incorporated, according to the characteristics described above.

An embodiment not shown in the figure, but which can be applied for example to the ravioli machine with stretched out dough 200 of figure 1, provides that the movement means 3 are configured to move a plurality of dosing devices 1, each operatively connected to a respective distributor 5 and nozzle 12, according to the possible technical characteristics described above.

In such a manner for example a ravioli machine with stretched out dough 200 manages the continuous or intermittent output of the filling by means of movement means 3 which simultaneously activate a plurality of dosing devices 1 for the simultaneous output of the filling from the respective nozzles 2, each which deposit on a specific spread sheet.

However, it is understood that what has been described above has an exemplary, non-limiting value; therefore, any detail variations that may be required due to technical and/or functional reasons are considered anyhow to fall within the same protection scope as defined by the claims set forth herein below.

## Claims

1. An injection apparatus (10) for depositing the filling on a dough sheet for making filled pasta comprises a filling outlet nozzle (2), a dosing device (1), between which a distributor (5) is interposed, adapted to receive the filling from a tank (4) and comprises movement means (3) configured to achieve a relative sliding of the dosing device (1) with respect to the nozzle (2) and to the distributor (5), said sliding being adapted to allow/interrupt the passage of the filling, **characterized in that** said movement means (3) comprise a linear actuator (31) provided with alternating rectilinear motion.

2. The injection apparatus (10) according to claim 1, wherein the distributor (5) comprises an opening (51) adapted to put it in communication with the tank (4), said opening (51) being respectively freed or obstructed during the relative sliding of the dosing device (1) with respect to the distributor (5).

3. The injection apparatus (10) according to any one of the preceding claims, wherein the linear actuator (31) comprises a movable stem (32) directly connected to the dosing device (1) for moving said dosing device (1) with respect to the distributor (5) and to the nozzle (2) according to an alternating rectilinear motion.

4. The injection apparatus (10) according to any one of the preceding claims, wherein the linear actuator (31) is a hydraulic piston.

5. The injection apparatus (10) according to claim 4, wherein the hydraulic piston is fed by the same hydraulic unit and/or pump which operates on a piston (41) of the tank (4) which pushes the filling towards the distributor (5) preferably by connection means (6).

6. The injection apparatus (10) according to any one of the preceding claims, wherein the dosing device (1) comprises a plunger (11) slidable inside the distributor (5) and preferably the nozzle (2), said plunger (11) being mechanically connected to the movable stem (32).

7. The injection apparatus (10) according to claim 6, wherein the plunger (11) has a cylindrical conformation for sliding inside a hole (21) of the nozzle (2), said hole (21) preferably having a diameter equal to that of the plunger (11) and comprising an outlet mouth (22) downstream, facing the sheet on which the filling has to be deposited.

8. The injection apparatus (10) according to any one of the preceding claims, wherein the distributor (5) comprises a chamber (53) located upstream of the hole (21), said chamber (53) being in communication with an inlet mouth (23) of said hole (21) and with the opening (51) preferably arranged on the lateral surface of said chamber (53).

9. The injection apparatus (10) according to any one of claims 6 to 8, wherein the plunger (11) slides inside the chamber (53) being shaped as a cylindrical hole (54) coaxial with the hole (21).

10. The injection apparatus (10) according to claim 9, wherein the cylindrical hole (54) of the chamber (53) has a larger diameter than the hole (21) and preferably than the plunger (11).

11. The injection apparatus (10) according to any one of the preceding claims, wherein the dosing device (1) takes an open position (A) and a closed position (C) in which said open position (A) provides that the plunger (11) is positioned above the opening (51) and in which said closed position (C) provides that the plunger (11) is positioned below the opening (51), preferably at the inlet mouth (23) of the nozzle (2), further preferably below the outlet mouth (22) of the nozzle (2).

12. The injection apparatus (10) according to claim 11, wherein the plunger (11) takes intermediate positions (I) between the open position (A) and the closed position (C) so that the opening (51) is partially open/closed to dose the passage of the filling from the tank (4) towards the filling outlet nozzle (2).

13. The injection apparatus (10) according to any one of the preceding claims, wherein the dosing device (1) comprises a body (12) for mechanically connecting it to the linear actuator (31) on one side and to the distributor (5) on the other and shaped so as to contain the movable stem (32) and the plunger (11) allowing the stroke necessary to reach the open position (A) and the closed position (C).

14. A ravioli machine (100, 200) comprising an injection apparatus (10) according to any one of the preceding claims.

15. A ravioli machine with stretched out dough (200) according to the preceding claim comprising an injection apparatus (10) wherein the movement means (3) are configured to move a plurality of dosing devices (1) each operatively connected to a respective distributor (5) and nozzle (12).
